# EUROPEAN PATENT APPLICATION

(11) **EP 2 983 325 A1**
(43) Date of publication of application: **10.02.2016**
(21) Application number: 14779643.7
(22) Date of filing: 24.03.2014
(51) Int. Cl.: H04L 9/32

(54) **DYNAMIC PASSWORD TOKEN, AND DATA TRANSMISSION METHOD AND SYSTEM FOR DYNAMIC PASSWORD TOKEN**

(30) Priority: 03.04.2013 CN 201310114423
(71) Applicant: Tendyron Corporation, Beijing 100083 (CN)
(72) Inventor: LI, Dongsheng, Beijing 100083 (CN)
(74) Representative: Maiwald Patentanwalts GmbH
(86) International application number: PCT/CN2014/073988
(87) International publication number: WO 2014/161438

(57) **Abstract**

Provided are a dynamic password token, and a data transmission method and system for the dynamic password token. When the dynamic password token needs to be in communication with a background system server, a series of methods of digital signature, encryption, decryption, etc. are used to improve the communication flow of the dynamic password token and the background system server. The present invention solves the problem of unsecure communication of the dynamic password token and the background system server in the prior art, ensures that the dynamic password token and the background system server can conduct reliable information interaction, and ensures the secure transmission of key information about seed keys, etc. in the processes of taking-effect, activation and synchronization operations on the dynamic password token, thereby ensuring the security of user accounts. Meanwhile, compared with the prior art, the present invention is convenient in implementation and simple in structure.

## Description

### FIELD

The present disclosure relates to an electronic technique field, and more particularly relates to a One-Time Password token, a data transmission method for a One-time Password token and a data transmission system.

### BACKGROUND

One-Time Password (OTP), as a safest identity authentication technology, is widely applied in more and more industries. A OTP token generates an unpredictable and random combination of digits (i.e. OTP value) according to one or more of algorithms, seed secret keys, time, event factors and challenge information. Each OTP value can only be used once. Since the OTP value is convenient and independent from the platform, it is widely applied in the enterprises, network games, the finance field and other fields.

In an existing application of the OTP token, the algorithm is preset in the OTP token. Each token needs a distinctive seed secret key. The seed secret key is introduced into the OTP token via information interaction with a background system server when the OTP token is validated or activated. Since the generation of the OTP value depends upon the seed secret key, the safety of the OTP will be greatly affected once the seed secret key leaks, such that the safety of the user account is damaged, thus causing loss to the user.

In addition, after being used for a period of time, the OTP token is required to be synchronized with the background system server, since the OTP token will not be able to generate the OTP value if a time error or an event factor error occurs. Once the information leaks during the synchronization, the information about time or event factor leaks, and thus the safety of the user account is damaged.

Further, when the existing OTP token is used, the OTP token needs to be connected with the background system server directly during validating, activation and synchronization, and thus someone holding the OTP token is required to go to the bank counter, such that the bank staff could operate the OTP token for directly interacting with the background system server.

### SUMMARY

The present disclosure seeks to solve at least one of the above problems.

A first objective of the present disclosure is to provide a data transmission method for a OTP token.

Another objective of the present disclosure is to provide a OTP token.

Another objective of the present disclosure is to provide a data transmission system for a OTP token.

In order to achieve the above objectives, technical solutions of the present disclosure may be implemented as follows. Embodiments of the present disclosure provide a data transmission method for a OTP token, including: receiving by the OTP token a starting instruction and performing a starting operation according to the starting instruction; receiving by the OTP token an operation instruction; generating by the OTP token a request message according to the operation instruction after receiving the operation instruction, and signing the request message to obtain a first digital signature, obtaining a request data package according to the request message and the first digital signature, and sending the request data package to a background system server; receiving by the background system server the request data package, obtaining the first digital signature and the request message from the request data package, and verifying the first digital signature; determining by the background system server a corresponding feedback message according to the request message after the first digital signature is successfully verified, obtaining a feedback data package by encrypting the feedback message and sending the feedback data package to the OTP token; receiving by the OTP token the feedback data package; decrypting by the OTP token the feedback data package to obtain the feedback message after receiving the feedback data package; storing by the OTP token the feedback message after obtaining the feedback message; generating by the OTP token a response message, signing the response message to obtain a second digital signature, obtaining a response data package according to the response message and the second digital signature and sending the response data package to the background system server; receiving by the background system server the response data package, obtaining the second digital signature and the response message from the response data package and verifying the second digital signature; performing by the background system server a response operation according to the response message after the second digital signature is successfully verified.

Moreover, the operation instruction is a validating operation instruction, the request message is a validating request message including a validating operation code and account information, and the feedback message includes at least one seed secret key.

Moreover, the feedback message further includes event factor information.

Moreover, the operation instruction is an activation operation instruction, the request message is an activation request message including an activation operation code and account information, the feedback message includes an activation code, and the data transmission method further includes: verifying by the OTP token the activation code included in the feedback message after storing the feedback message by the OTP token; and triggering generating the response message by the OTP token, after the activation code is successfully verified by the OTP token.

Moreover, verifying by the OTP token the activation code included in the feedback message includes:
obtaining by the OTP token the activation code included in the feedback message, generating by the OTP token an activation verification code according to a predetermined activation code generating algorithm, comparing by the OTP token the activation code with the activation verification code, and triggering generating the response message by the OTP token if the activation code is consistent with the activation verification code; or
if the background system server sends the feedback data package together with an activation verification code to the OTP token, after receiving by the OTP token the feedback data package and the activation verification code and obtaining by the OTP token the feedback message from the feedback data package, comparing by the OTP token the activation code included in the feedback message with the activation verification code, and triggering generating the response message by the OTP token if the activation code is consistent with the activation verification code.

Moreover, the operation instruction is a synchronization operation instruction, the request message is a synchronization request message including a synchronization operation code and account information, and the feedback message includes a synchronization code.

Moreover, decrypting by the OTP token the feedback data package to obtain the feedback message after receiving the feedback data package includes: outputting by the OTP token an indication message after receiving the feedback data package; receiving by the OTP token a confirmation instruction for confirming the indication message; decrypting by the OTP token the feedback data package according to the confirmation instruction, so as to obtain the feedback message.

Embodiments of the present disclosure also provide a OTP token. The OTP token includes a first input module, a second input module, a signature module, a transmission module, an encryption/decryption module and a storage module. The first input module is configured to receive a starting instruction and to perform a starting operation according to the starting instruction; the second input module is configured to receive an operation instruction and to send the operation instruction to the signature module; the signature module is configured to generate a request message according to the operation instruction, to sign the request message to obtain a first digital signature, to obtain a request data package according to the request message and the first digital signature, and to send the request data package to the transmission module; the transmission module is configured to send the request data package to an external device after receiving the request data package sent by the signature module, to receive a feedback data package from the external device, and to send the feedback data package to the encryption/decryption module; the encryption/decryption module is configured to decrypt the feedback data package to obtain a feedback message after receiving the feedback data package sent by the transmission module, and to send the feedback message to the storage module; the storage module is configured to store the feedback message after receiving the feedback message sent by the encryption/decryption module; the signature module is further configured to generate a response message after the storage module stores the feedback message, to sign the response message to obtain a second digital signature, to obtain a response data package according to the response message and the second digital signature, and to send the response data package to the transmission module; the transmission module is further configured to send the response data package to the external device after receiving the response data package sent by the signature module.

Moreover, the OTP token further includes a OTP generating module configured to generate a OTP.

Moreover, the OTP token further includes a validating module, in which the operation instruction is a validating operation instruction, the request message is a validating request message including a validating operation code and account information, the feedback message includes at least one seed secret key, the validating module is connected with the storage module and configured to perform a validating operation according to the feedback message stored in the storage module.

Moreover, the feedback message further includes event factor information.

Moreover, the OTP token further includes an activation module, in which the operation instruction is an activation operation instruction, the request message is an activation request message including an activation operation code and account information, the feedback message includes an activation code, the activation module is connected with the storage module and configured to obtain the activation code included in the feedback message after receiving the feedback message, to generate an activation verification code according to a predetermined activation code generating algorithm and compare the activation code with the activation verification code, and to determine that the activation code is successfully verified if the activation code is consistent with the activation verification code; or the transmission module is further configured to receive an activation verification code from the external device when receiving the feedback data package from the external device, to send the activation verification code to the activation module when sending the feedback data package to the encryption/decryption module, and the activation module is further configured to receive the activation verification code sent by the transmission module when receiving the feedback message sent by the encryption/decryption module, to compare the activation code included in the feedback message with the activation verification code, and to determine that the activation code is successfully verified if the activation code is consistent with the activation verification code.

Moreover, the OTP token further includes a synchronization module, in which the operation instruction is a synchronization operation instruction, the request message is a synchronization request message including a synchronization operation code and account information, the feedback message includes a synchronization code, and the synchronization module is connected with the storage module, and configured to perform a synchronization operation according to the feedback message stored in the storage module.

Moreover, the OTP token further includes an output module and a third input module, in which the output module is configured to output an indication message after the transmission module receives the feedback data package, and the third input module is configured to receive a confirmation instruction for confirming the indication message, and trigger the transmission module to send the feedback data package to the encryption/decryption module.

Embodiments of the present disclosure also provide a data transmission system. The data transmission system includes a background system server and a OTP token mentioned above, the background system server is configured to receive the request data package sent by the OTP token, obtain the first digital signature and the request message from the request data package and verify the first digital signature, generate the feedback message according to the request message after the first digital signature is successfully verified, obtain the feedback data package by encrypting the feedback message and send the feedback data package to the OTP token, receive the response data package sent by the OTP token, obtain the second digital signature and the response message from the response data package and verify the second digital signature, perform a response operation according to the response message after the second digital signature is successfully verified.

It can be seen from the technical solutions provided by the present disclosure that, with the data transmission method for a OTP token and the data transmission system, when the OTP token needs to communicate with the background system server, the communication process between the OTP token and the background system server is improved by means of the digital signature and the encryption/decryption. The present disclosure solves the problem that the communication between the OTP token and the background system server is unsafe in the related art, ensures that the OTP token and the background system server may exchange information with each other reliably, and ensures a safe transmission of the key information such as the seed secret key during validating, activating and synchronizing the OTP token, such that the safety of the user account may be guaranteed. Meanwhile, compared to the related art, the present disclosure is easy to implement and has a simple structure.

### BRIEF DESCRIPTION OF THE DRAWINGS

To illustrate the technical solution in embodiments of the present disclosure more clearly, the following briefly describes the accompanying drawings required for describing embodiments. Apparently, the accompanying drawings in the following description merely show some embodiments of the present disclosure, and persons of ordinary skill in the art can derive other drawings from these accompanying drawings without creative efforts. Among the drawings:
Fig. 1 is a flow chart of a data transmission method for a OTP token according to a first embodiment of the present disclosure;
Fig. 2 is a block diagram of a OTP token according to a first embodiment of the present disclosure;
Fig. 3 is a block diagram of a data transmission system according to a first embodiment of the present disclosure;
Fig. 4 is a flow chart of a data transmission method for a OTP token according to a second embodiment of the present disclosure;
Fig. 5 is a block diagram of a OTP token according to a second embodiment of the present disclosure;
Fig. 6 is a flow chart of a data transmission method for a OTP token according to a third embodiment of the present disclosure;
Fig. 7 is a block diagram of a OTP token according to a third embodiment of the present disclosure;
Fig. 8 is a flow chart of a data transmission method for a OTP token according to a fourth embodiment of the present disclosure; and
Fig. 9 is a block diagram of a OTP token according to a fourth embodiment of the present disclosure.

### DETAILED DESCRIPTION

To make the technical solutions of embodiments of the present disclosure more comprehensible, the following describes the technical solutions in the embodiments of the present disclosure with reference to the accompanying drawings. Apparently, the described embodiments are merely a part of the embodiments of the present disclosure rather than all of the embodiments. All other embodiments obtained by persons of ordinary skill in the art based on the embodiments of the present disclosure without creative efforts shall fall within the protection scope of the present disclosure.

It is to be understood that phraseology and terminology used herein with reference to device or element orientation (such as, terms like "longitudinal", "lateral", "up", "down", "front", "rear", "left", "right", "vertical", "horizontal", "top", "bottom", "inside", "outside") are only used to simplify description of the present invention, and do not indicate or imply that the device or element referred to must have or operated in a particular orientation. They cannot be seen as limits to the present disclosure. Moreover, it should be understood that, terms such as "first" and "second" are used herein for purposes of description, and are not intended to represent or indicate relative importance or significance or to represent or indicate numbers or locations.

In the description of the present disclosure, it should be understood that, unless specified or limited otherwise, the terms "mounted", "connected" and "coupled" should be understood broadly, and may be, for example, fixed connections, detachable connections, or integral connections; or may be mechanical or electrical connections; or may be direct connections or indirect connections via intervening structures, which can be understood by those skilled in the art according to specific situations.

In the following, embodiments of the present disclosure will be described in detail with reference to drawings.

### EMBODIMENT 1

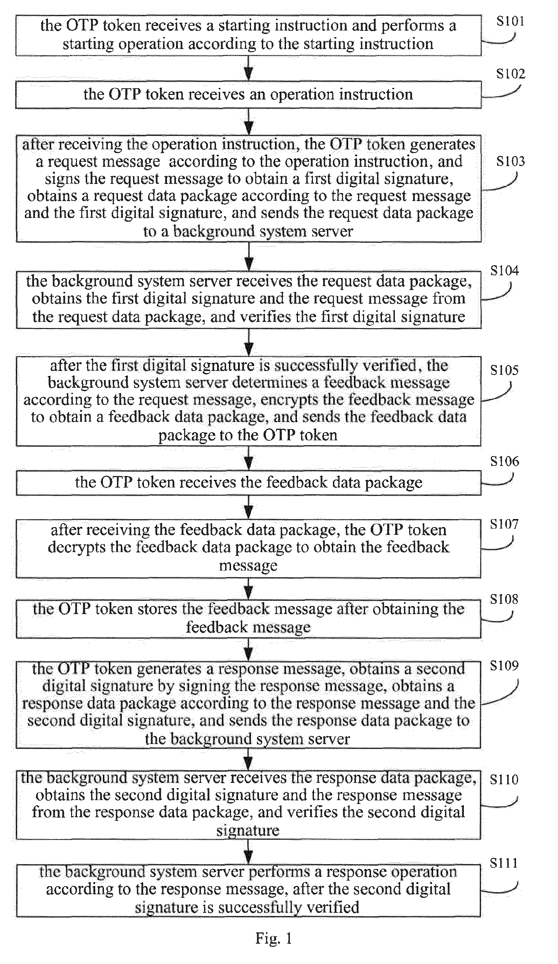

Fig. 1 is a flow chart of a data transmission method for a OTP token according to a first embodiment of the present disclosure. The data transmission method for a OTP token includes following steps.

In step S101, the OTP token receives a starting instruction and performs a starting operation according to the starting instruction.

Specifically, a user may turn on the power of the OTP token by pressing a button. Alternatively, if the OTP token has already power-on, the OTP token may enter a OTP mode according to an entering OTP mode instruction inputted from outside.

In step S102, the OTP token receives an operation instruction.

Specifically, the operation instruction may be a validating instruction, an activation instruction, or a synchronization instruction. The user may input the operation instruction by pressing a button on the OTP token or via a virtual keyboard, or the user may connect the OTP token with a terminal (for example, a PC, a notebook computer, a mobile phone) and operate the terminal for sending the operation instruction to the OTP token. When the OTP token is used for a first time, a validating and activation operation is required to be performed on the OTP token. When the OTP token cannot be used or other faults occur, a synchronization operation is required to be performed on the OTP token.

In step S103, after receiving the operation instruction, the OTP token generates a request message according to the operation instruction, signs the request message to obtain a first digital signature, obtains a request data package according to the request message and the first digital signature, and sends the request data package to a background system server.

For example, the OTP token may use a signature module thereof to sign the request message after generating the request message according to the operation instruction.

Specifically, referring to different operation instructions, the request message may be a validating request message, an activation request message or a synchronization request message. Different request messages contain different contents. For example, the validating request message may include an operation code of the validating request, account information corresponding to the OTP token and any other related information.

In addition, generally, the existing OTP token only includes a OTP generating module. However, the OTP token according to embodiments of the present disclosure not only includes the OTP generating module, but also includes a signature module. The signature module is configured to sign the data to be sent to the background system server and send the signature data to the background system server, such that the background system server verifies the signature data after receiving the signature data, thus authenticating the identity of the OTP token, preventing the user account from being tampered or stolen, and guaranteeing the safety of the account of the OTP token. The OTP token may include a pair of public key and private key, and a digital certificate for signing. The public key is sent to the background system server by the OTP token. In this way, the OTP token may sign the data using the private key and the background system server may verify the data using the public key. Meanwhile, the background system server may encrypt the data using the public key and send the encrypted data to the OTP token, and the OTP token may decrypt the encrypted data using the private key.

Specifically, after generating the request message by the OTP token, step S103 may implemented by the following ways.
(1) After signing the request message using the private key to obtain the first digital signature, the OTP token generates the request data package according to the first digital signature and the request message, and sends the request data package to the background system server. In this way, the background system server may authenticate the identity of the OTP token according to the signature after receiving the request message.
(2) After signing the request message using the private key to obtain the first digital signature, the OTP token encrypts the request message, and then generates the request data package according to the first digital signature and the encrypted request message, and sends the request data package to the background system server. In this way, the background system server may authenticate the identity of the OTP token using the signature after receiving the request message, and meanwhile the safety of the transmission may be ensured by encrypting the data.
(3) After signing the request message using the private key to obtain the first digital signature, the OTP token generates the request data package by encrypting the request message and the first digital signature, and sends the request data package to the background system server. In this way, the background system server may authenticate the identity of the OTP token using the signature after receiving the request message, and meanwhile the safety of the transmission may be further ensured by encrypting the data.

The signature algorithm used in the present disclosure is an irreversible algorithm (e.g., Hash algorithm), so as to avoid turning back. The decryption algorithm may be a symmetric algorithm or an asymmetric algorithm.

A specific method of obtaining the digital signature and other details are well known in the art, which are not elaborated herein.

In step S104, the background system server receives the request data package, obtains the first digital signature and the request message from the request data package and verifies the first digital signature.

Specifically, the background system server needs to verify the data sent by the OTP token, so the background system server includes a verifying module corresponding to the signature module in the OTP token, for example, the background system server holds the public key corresponding to the private key of the OTP token. Specifically, after receiving the request data package, the background system server obtains the first digital signature and the request message from the request data package (if the request data package is encrypted, it should be decrypted firstly), and verifies the first digital signature sent by the OTP token using the public key corresponding to the private key of the OTP token. The specific process of verifying is well known in the related art, which is not elaborated herein.

In step S105, after the first digital signature is successfully verified, the background system server determines a feedback message according to the request message, encrypts the feedback message to obtain a feedback data package, and sends the feedback data package to the OTP token.

Specifically, referring to the different request messages (validating request message, activation request message or synchronization request message), the background system server selects or generates a corresponding feedback message. For example, if the request message is the validating request message, the background system server selects a corresponding seed secret key and an event factor and generates the corresponding feedback message according to the operation code of the validating request and related information in the validating request message. For the safe transmission of the data, the background system server encrypts the feedback message, for example, the background system server encrypts the feedback message using the public key, so as to obtain the feedback data package.

In step S106, the OTP token receives the feedback data package.

In step S107, after receiving the feedback data package, the OTP token decrypts the feedback data package to obtain the feedback message.

Specifically, after receiving the feedback data package, the OTP token decrypts the feedback data package using the private key, so as to obtain the feedback message.

In step S108, the OTP token stores the feedback message after obtaining the feedback message.

In step S109, the OTP token generates a response message, signs the response message to obtain a second digital signature, obtains a response data package according to the response message and the second digital signature, and sends the response data package to the background system server.

For example, after the OTP token generates the response message, the signature module in the OTP token signs the response message to obtain the second digital signature.

Specifically, referring to different operation instructions (a validating instruction, an activation instruction, a synchronization instruction), the OTP token receives different feedback data, and thus the response message generated by the OTP token may be different. For example, with regard to the validating instruction, the response message generated in this step may include information indicating the background system server to perform a validating process.

Specifically, after the OTP token generates the response message, step S109 may be implemented in the following ways.
(1) After signing the response message using the private key to obtain the second digital signature, the OTP token generates the response data package according to the second digital signature and the response message, and sends the response data package to the background system server. In this way, the background system server may authenticate the identity of the OTP token using the signature after receiving the response message.
(2) After signing the response message using the private key to obtain the second digital signature, the OTP token encrypts the response message, and then generates the response data package according to the second digital signature and the encrypted response message, and sends the response data package to the background system server. In this way, the background system server may authenticate the identity of the OTP token using the signature after receiving the response message, and meanwhile the safety of the data transmission may be ensured by encrypting the data.
(3) After signing the response message using the private key to obtain the second digital signature, the OTP token generates the response data package by encrypting the second digital signature and the response message, and sends the response data package to the background system server. In this way, the background system server may authenticate the identity of the OTP token using the signature after receiving the response message, and meanwhile the safety of the data transmission may be further ensured by encrypting the data.

In step S110, the background system server receives the response data package, obtains the second digital signature and the response message from the response data package, and verifies the second digital signature.

In step S111, the background system server performs a response operation according to the response message after the second digital signature is successfully verified.

Specifically, the background system server performs different response operations according to different response messages. For example, with regard to the response message corresponding to the validating instruction, the background system server performs a validating process according to the response message. Meanwhile, the background system server may set the validating process as unavailable, so as to prevent the OTP token from validating repeatedly. Specifically, step S108 may be implemented in following ways.
(1) After receiving the feedback data package, the OTP token outputs an indication message, and them obtains the feedback message by decrypting the feedback data package. For example, when the OTP token receives the feedback data package, an indication message is displayed on the screen for indicating that a data package is received, i.e. the OTP token performs an operation (such as, a validating operation, an activation operation, a synchronization operation). A progress bar may also be shown on the screen, such that the user may learn about the progress of the operation, and may take steps to block the operation if the operation is not performed by the user, thus guaranteeing the safety of the user account.
(2) After receiving the feedback data package, the OTP token outputs an indication message, and receives a confirmation instruction for confirming the indication message. The OTP token decrypts the feedback data package to obtain the feedback message according to the confirmation instruction. For example, if the OTP token receives the feedback data package (indicating that an operation such as a validating operation, an activation operation, a synchronizing operation is performed on the OTP token), an indication message is displayed on the screen for indicating that a data package is received, and the operation is interrupted to wait for the confirmation information from the user. Only when the user confirms the operation, the OTP token performs the following operation, and decrypts the feedback data package to obtain the feedback message. In this way, the user may learn about the progress of the operation and may take steps to block the operation if the operation is not performed by the user, thus guaranteeing the safety of the user account.

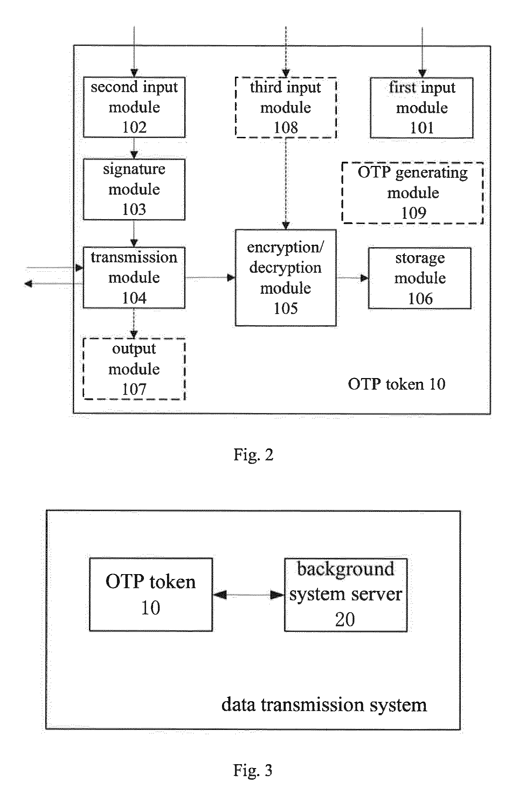

As shown in Fig. 2, embodiments of the present disclosure further provide a OTP token 10 using the above data transmission method for a OTP token. The OTP token includes a first input module 101, a second input module 102, a signature module 103, a transmission module 104, an encryption/decryption module 105 and a storage module 106.

The first input module 101 is configured to receive a starting instruction and perform a starting operation according to the starting instruction.

Specifically, the first input module 101 may be a button. A user may turn on the power of the OTP token by pressing the button. Alternatively, if the OTP token has already power-on, the OTP token may enter a OTP mode according to an entering OTP mode instruction inputted from outside.

The second input module 102 is configured to receive an operation instruction and send the operation instruction to the signature module 103.

Specifically, the operation instruction may be a validating instruction, an activation instruction, or a synchronization instruction. The second input module 102 may be a button or a virtual keyboard for receiving the operation instruction. Or, the user may connect the OTP token with a terminal (a PC, a notebook computer, a mobile phone) and operate the terminal for sending the operation instruction to the OTP token.

The signature module 103 is configured to generate a request message according to the operation instruction, sign the request message to obtain a first digital signature, obtain a request data package according to the request message and the first digital signature, and send the request data package to the transmission module 104. The signature module 103 is further configured to generate a response message after the storage module 106 stores the feedback message, sign the response message to obtain a second digital signature, obtain a response data package according to the response message and the second digital signature, and send the response data package to the transmission module 104.

The transmission module 104 is configured to send the request data package to an external device after receiving the request data package sent by the signature module 103. The transmission module 104 is further configured to send the response data package to the external device after receiving the response data package sent by the signature module 103. The transmission module 104 is also configured to receive a feedback data package from the external device, and send the feedback data package to the encryption/decryption module 105.

Specifically, the transmission module 104 may be a wired or wireless transmission module, such as a USB interface transmission module, an audio interface transmission module, an abnormity interface transmission module, a Blue Tooth transmission module, an infrared transmission module, an NFC transmission module.

Specifically, whenever the transmission module 104 receives the request data package or the response data package sent from the signature module 103, the transmission module 104 sends the data package to the background system server, such that the background system server may process the data and make a response.

The encryption/decryption module 105 is configured to decrypt the feedback data package to obtain feedback message after receiving the feedback data package sent by the transmission module 104, and send the feedback message to the storage module 106.

Specifically, the encryption/decryption module 105 may include a private key of the OTP token, and may decrypt the feedback data package using the private key to obtain the feedback message.

The storage module 106 is configured to store the feedback message after receiving the feedback message sent by the encryption/decryption module 105.

Furthermore, the OTP token in this embodiment may further include an output module 107 and a third input module 108. The output module 107 is configured to output an indication message after the transmission module 104 receives the feedback data package. The third input module 108 is configured to receive a confirmation instruction for confirming the indication message, and trigger the transmission module 104 to send the feedback data package to the encryption/decryption module 105.

In addition, the OTP token 10 of the present disclosure may further include a OTP generating module 109, the OTP generating module 109 may be configured to generate a OTP according to the seed secret key, the event factor, the challenge code and the like.

As shown in Fig. 3, embodiments of the present disclosure also provide a data transmission system using the above data transmission method for a OTP token. The data transmission system includes the above-mentioned OTP token 10 and a background system server 20.

The OTP Token performs functions described in the above-mentioned method.

The background system server 20 receives the request data package sent by the OTP token 10, obtains the first digital signature and the request message from the request data package and verifies the first digital signature.

The background system server 20 generates the feedback message according to the request message after the first digital signature is successfully verified, obtains the feedback data package by encrypting the feedback message, and sends the feedback data package to the OTP token 10.

The background system server 20 receives the response data package sent by the OTP token 10, obtains the second digital signature and the response message from the response data package and verifies the second digital signature.

The background system server 20 performs a response operation according to the response message after the second digital signature is successfully verified.

It can be seen from the technical solutions provided by the present disclosure that, with the OTP token, the data transmission method for the OTP token and the data transmission system provided by the present disclosure, when the OTP token needs to communicate with the background system server, the communication process between the OTP token and the background system server is improved by means of the digital signature and the encryption/decryption. The present disclosure solves the problem that the communication between the OTP token and the background system server is unsafe in the related art, ensures that the OTP token and the background system server may exchange information with each other reliably, and ensures a safe transmission of the key information such as the seed secret key during validating, activating and synchronizing the OTP token, such that the safety of the user account may be guaranteed. Meanwhile, compared to the related art, the present disclosure is easy to implement and has a simple structure.

### Embodiment 2

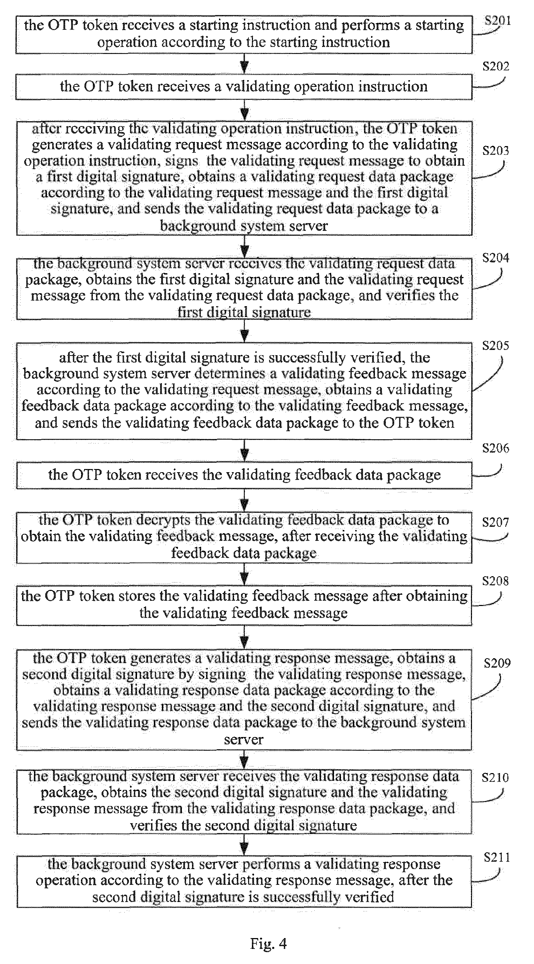

As shown in Fig. 4, in this embodiment, a data transmission method for a OTP token (specifically, a method for validating a OTP token) is provided.

In step S201, the OTP token receives a starting instruction and performs a starting operation according to the starting instruction.

Specifically, a user may turn on the power of the OTP token by pressing a button. Or, if the OTP token has already power-on, the OTP token may enter a OTP mode according to an entering OTP mode instruction inputted from outside.

In step S202, the OTP token receives a validating operation instruction.

Specifically, the user may input the validating operation instruction by pressing a button on the OTP token or via a virtual keyboard, or the user may connect the OTP token with a terminal (a PC, a notebook computer, a mobile phone, etc.) and operate the terminal for sending the validating operation instruction to the OTP token. When the OTP token is used for a first time, a validating operation is required to be performed on the OTP token, such that the user can use the OTP token.

In step S203, after receiving the validating operation instruction, the OTP token generates a validating request message according to the validating operation instruction, signs the validating request message to obtain a first digital signature, obtains a validating request data package according to the validating request message and the first digital signature, and sends the validating request data package to a background system server.

For example, a signature module of the OTP token may sign the validating request message after the OTP token generates the validating request message, so as to obtain the first digital signature.

Specifically, the validating request message may include a validating operation code, account information corresponding to the OTP token and any other related information.

In addition, generally, the existing OTP token only includes a OTP generating module. However, the OTP token according to embodiments of the present disclosure not only includes the OTP generating module, but also includes a signature module. The signature module is configured to sign the data to be sent to the background system server and send the signature data, such that the background system server verifies the signature data after receiving the signature data, thus authenticating the identity of the OTP token, preventing the account from being tampered or stolen, and guaranteeing the safety of the account of the OTP token. The OTP token may include a pair of public key and private key, and a digital certificate for signing. The public key is sent to the background system server by the OTP token. In this way, the OTP token may sign the data using the private key and the background system server may verify the data using the public key. Meanwhile, the background system server may encrypt the data using the public key and send the encrypted data to the OTP token, and the OTP token may decrypt the encrypted data using the private key.

Specifically, after generating the validating request message by the OTP token, step S203 may be implemented by the following ways.
(1) After signing the validating request message using the private key to obtain the first digital signature, the OTP token generates the validating request data package according to the first digital signature and the validating request message, and sends the validating request data package to the background system server. In this way, the background system server may authenticate the identity of the OTP token using the signature after receiving the validating request message.
(2) After signing the validating request message using the private key to obtain the first digital signature, the OTP token encrypts the validating request message, and then generates the validating request data package according to the first digital signature and the encrypted validating request message, and sends the validating request data package to the background system server. In this way, the background system server may authenticate the identity of the OTP token using the signature after receiving the validating request message, and meanwhile the safety of the data transmission may be ensured by encrypting the data.
(3) After signing the validating request message using the private key to obtain the first digital signature, the OTP token generates the validating request data package by encrypting the validating request message and the first digital signature, and sends the validating request data package to the background system server. In this way, the background system server may authenticate the identity of the OTP token using the signature after receiving the validating request message, and meanwhile the safety of the data transmission may be further ensured by encrypting the data.

The signature algorithm used in the present disclosure is an irreversible algorithm (e.g., Hash algorithm), so as to avoid turning back. The decryption algorithm may be a symmetric algorithm or an asymmetric algorithm.

Other details about a specific method of obtaining the digital signature are well known in the art, which are not elaborated herein.

In step S204, the background system server receives the validating request data package, obtains the first digital signature and the validating request message from the validating request data package and verifies the first digital signature.

Specifically, the background system server needs to verify the data sent by the OTP token, so the background system server includes a verifying module corresponding to the signature module in the OTP token, for example, the background system server holds the public key corresponding to the private key of the OTP token. Specifically, after receiving the request data package, the background system server obtains the first digital signature and the request message from the request data package (if the request data package is encrypted, it should be decrypted firstly), and verifies the first digital signature sent by the OTP token using the public key corresponding to the private key of the OTP token. The specific process of verifying is well known in the related art, which is not elaborated herein.

In step S205, after the first digital signature is successfully verified, the background system server determines a validating feedback message according to the validating request message, obtains a validating feedback data package according to the validating feedback message, and sends the validating feedback data package to the OTP token.

Specifically, according to the validating request message, the background system server selects or generates a corresponding validating feedback message. For example, according to the validating operation code and related information in the validating request message, the background system server selects at least one corresponding seed secret key and event factor to generate the corresponding validating feedback message. For the safety of the data transmission, the background system server encrypts the validating feedback message, for example, the background system server encrypts the validating feedback message using the public key, so as to obtain the validating feedback data package for transmission.

In step S206, the OTP token receives the validating feedback data package.

In step S207, the OTP token decrypts the validating feedback data package to obtain the validating feedback message after receiving the validating feedback data package.

Specifically, the OTP token decrypts the validating feedback data package using the private key to obtain the validating feedback message, after receiving the validating feedback data package.

In step S208, the OTP token stores the validating feedback message after obtaining the validating feedback message.

In step S209, the OTP token generates a validating response message, obtains a second digital signature by signing the validating response message, obtains a validating response data package according to the validating response message and the second digital signature, and sends the validating response data package to the background system server.

For example, the signature module in the OTP token signs the validating response message to obtain the second digital signature, after the OTP token generates the validating response message.

Specifically, with regard to validating operation instructions, the validating response message generated in this step may include information indicating the background system server to perform a validating process.

Specifically, after the OTP token generates the validating response message, step S209 may be implemented in the following ways.
(1) After signing the validating response message using the private key to obtain the second digital signature, the OTP token generates the validating response data package according to the second digital signature and the validating response message, and sends the validating response data package to the background system server. In this way, the background system server may authenticate the identity of the OTP token using the signature after receiving the validating response message.
(2) After signing the validating response message using the private key to obtain the second digital signature, the OTP token encrypts the validating response message, and then generates the validating response data package according to the second digital signature and the encrypted validating response message, and sends the validating response data package to the background system server. In this way, the background system server may authenticate the identity of the OTP token using the signature after receiving the validating response message, and meanwhile the safety of the data transmission may be ensured by encrypting the data.
(3) After signing the validating response message using the private key to obtain the second digital signature, the OTP token generates the validating response data package by encrypting the second digital signature and the validating response message, and sends the validating response data package to the background system server. In this way, the background system server may authenticate the identity of the OTP token using the signature after receiving the validating response message, and meanwhile the safety of the data transmission may be further ensured by encrypting the data.

In step S210, the background system server receives the validating response data package, obtains the second digital signature and the validating response message from the validating response data package, and verifies the second digital signature.

In step S211, the background system server performs a validating response operation according to the validating response message, after the second digital signature is successfully verified.

Specifically, with regard to the validating response message corresponding to the validating instruction, the background system server performs a validating process according to the validating response message. Meanwhile, the background system server may set the validating process as unavailable, so as to prevent the OTP token from validating repeatedly.

Specifically, step S208 may be implemented in following ways.
(1) After receiving the validating feedback data package, the OTP token outputs an indication message, and them obtains the validating feedback message by decrypting the validating feedback data package. For example, when the OTP token receives the validating feedback data package, the indication message is displayed on the screen for indicating that a data package is received, i.e., the indication message indicates that the OTP token is performing an operation (such as, a validating operation, an activation operation, a synchronization operation). Also, a progress bar may be shown on the screen, such that the user may learn about process of the operation and may take steps to block the operation if the operation is not performed by the user, thus guaranteeing the safety of the user account.
(2) After receiving the validating feedback data package, the OTP token outputs an indication message, and receives a confirmation instruction for confirming the indication message. The OTP token decrypts the validating feedback data package to obtain the validating feedback message according to the confirmation instruction. For example, if the OTP token receives the validating feedback data package (indicating that an operation such as a validating operation, an activation operation or a synchronization operation is performed on the OTP token), an indication message is displayed on the screen for indicating that a data package is received, and the operation is interrupted to wait for the confirmation information from the user. Only when the user confirms the operation, the OTP token performs the following operation, and decrypts the validating feedback data package to obtain the validating feedback message. In this way, the user may learn about the progress of the operation and may take steps to block the operation if the operation is not performed by the user, thus guaranteeing the safety of the user account.

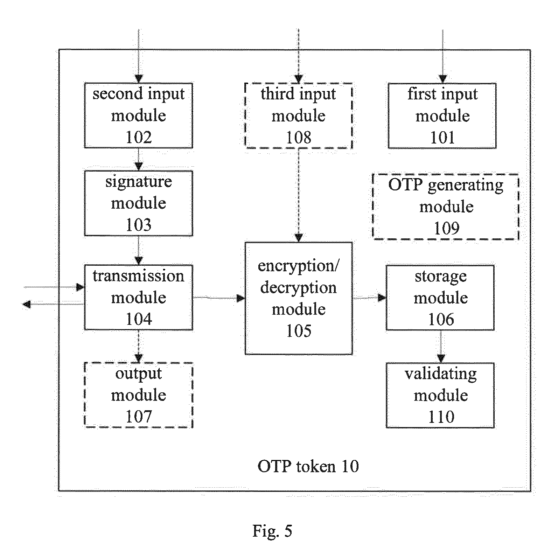

In addition, as shown in Fig. 5, compared with the first embodiment, in the second embodiment, the OTP token further includes a validating module 110, and the validating module 110 is connected with the storage module 106 and configured to perform a validating operation according to the feedback message in the storage module 106.

Specifically, the validating module 106 performs the validating operation according to at least one seed secret key and event factor information included in the feedback message. If the validating operation is successful, the validating module 110 may be set as unavailable by the OTP token, so as to prevent the OTP token from validating repeatedly.

It can be seen from the technical solutions provided by the present disclosure that, with the method for validating the OTP token according to the present disclosure, when the OTP token needs to communicate with the background system server, the communication process between the OTP token and the background system server is improved by means of the digital signature and the encryption/decryption. The present disclosure solves the problem that the communication between the OTP token and the background system server is unsafe in the related art, ensures that the OTP token and the background system server may exchange information with each other reliably, and ensures a safe transmission of the key information such as the seed secret key during validating the OTP token, such that the safety of the user account may be guaranteed. Meanwhile, compared to the related art, the present disclosure is easy to implement and has a simple structure.

### Embodiment 3

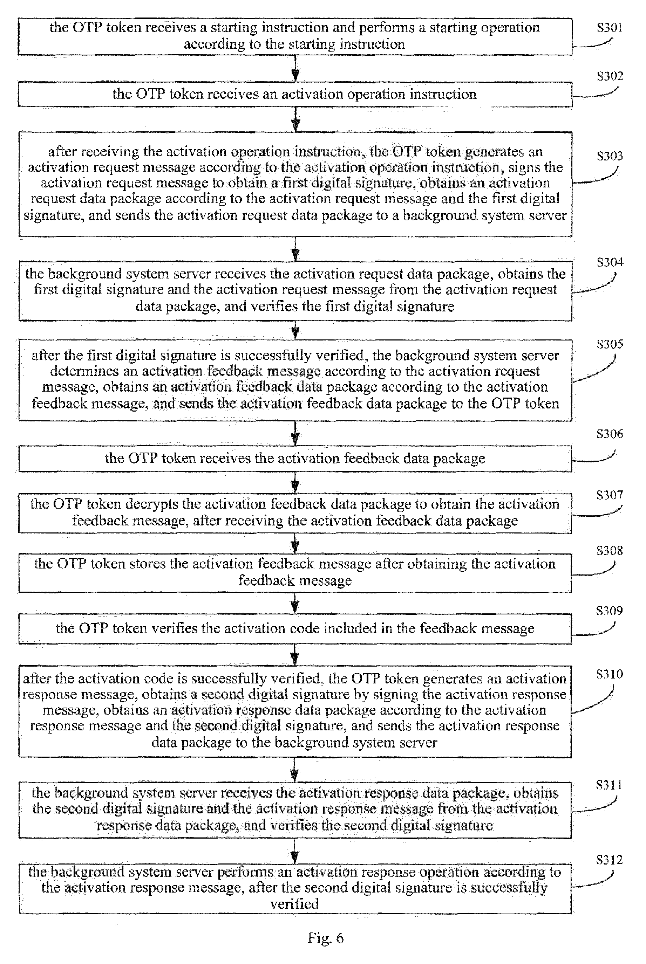

As shown in Fig. 6, in this embodiment, a data transmission method for a OTP token (specifically, an activation data transmission method for a OTP token) is provided.

In step S301, the OTP token receives a starting instruction and performs a starting operation according to the starting instruction.

Specifically, a user may turn on the power of the OTP token by pressing a button. Or, if the OTP token has already power-on, the OTP token may enter a OTP mode according to an entering OTP mode instruction inputted from outside.

In step S302, the OTP token receives an activation operation instruction.

Specifically, the user may input the activation operation instruction by pressing a button on the OTP token or via a virtual keyboard, or the user may connect the OTP token with a terminal (a PC, a notebook computer, a mobile phone, etc.) and operate the terminal for sending the activation operation instruction to the OTP token. When the OTP token is used for a first time, an activation operation is required to be performed on the OTP token, such that the user can use the OTP token.

In step S303, after receiving the activation operation instruction, the OTP token generates an activation request message according to the activation operation instruction, signs the activation request message to obtain a first digital signature, obtains an activation request data package according to the activation request message and the first digital signature, and sends the activation request data package to a background system server.

For example, a signature module of the OTP token may sign the activation request message to obtain the first digital signature, after the OTP token generates the activation request message.

Specifically, the activation request message may include an activation operation code, account information corresponding to the OTP token and any other related information.

In addition, generally, the existing OTP token only includes a OTP generating module. However, the OTP token according to embodiments of the present disclosure not only includes the OTP generating module, but also includes a signature module. The signature module is configured to sign the data to be sent to the background system server and send the signature data, such that the background system server verifies the signature data after receiving the signature data, thus authenticating the identity of the OTP token, preventing the account from being tampered or stolen, and guaranteeing the safety of the account of the OTP token. The OTP token may include a pair of public key and private key, and a digital certificate for signing. The public key is sent to the background system server by the OTP token. In this way, the OTP token may sign a signature on the data using the private key and the background system server may verify the data using the public key. Meanwhile, the background system server may encrypt the data using the public key and send the encrypted data to the OTP token, and the OTP token may decrypt the encrypted data using the private key.

Specifically, after generating the activation request message by the OTP token, step S203 may be implemented by the following ways.
(1) After signing the activation request message using the private key to obtain the first digital signature, the OTP token generates the activation request data package according to the first digital signature and the activation request message, and sends the activation request data package to the background system server. In this way, the background system server may authenticate the identity of the OTP token using the signature after receiving the activation request message.
(2) After signing the activation request message using the private key to obtain the first digital signature, the OTP token encrypts the activation request message, and then generates the activation request data package according to the first digital signature and the encrypted activation request message, and sends the activation request data package to the background system server. In this way, the background system server may authenticate the identity of the OTP token using the signature after receiving the activation request message, and meanwhile the safety of the data transmission may be ensured by encrypting the data.
(3) After signing the activation request message using the private key to obtain the first digital signature, the OTP token generates the activation request data package by encrypting the activation request message and the first digital signature, and sends the activation request data package to the background system server. In this way, the background system server may authenticate the identity of the OTP token using the signature after receiving the activation request message, and meanwhile the safety of the data transmission may be further ensured by encrypting the data.

The signature algorithm used in the present disclosure is an irreversible algorithm (e.g., Hash algorithm), so as to avoid turning back. The decryption algorithm may be a symmetric algorithm or an asymmetric algorithm.

Other details about a specific method of obtaining the digital signature are well known in the art, which are not elaborated herein.

In step S304, the background system server receives the activation request data package, obtains the first digital signature and the activation request message from the activation request data package and verifies the first digital signature.

Specifically, the background system server needs to verify the data sent by the OTP token, so the background system server includes a verifying module corresponding to the signature module in the OTP token, for example, the background system server holds the public key corresponding to the private key of the OTP token. Specifically, after receiving the request data package, the background system server obtains the first digital signature and the request message from the request data package (if the request data package is encrypted, it should be decrypted firstly), and verifies the first digital signature sent by the OTP token using the public key corresponding to the private key of the OTP token. The specific process of verifying is well known in the related art, which is not elaborated herein.

In step S305, after the first digital signature is successfully verified, the background system server determines an activation feedback message according to the activation request message, obtains an activation feedback data package according to the activation feedback message, and sends the activation feedback data package to the OTP token.

Specifically, according to the activation request message, the background system server selects or generates a corresponding activation feedback message. For example, the background system server selects or generates the activation code according to the activation operation code and related information in the activation request message, so as to determine the activation feedback message. The background system server determines the activation feedback message in following ways: (1) the background system server generates the activation code, encrypts the activation code and obtains the activation feedback message according to the encrypted activation code; (2) the background system server generates the activation code and the activation verification code, encrypts the activation code and the activation verification code, and obtains the activation feedback message according to the encrypted activation code and the encrypted activation verification code.

In step S306, the OTP token receives the activation feedback data package.

In step S307, the OTP token decrypts the activation feedback data package to obtain the activation feedback message, after receiving the activation feedback data package.

Specifically, the OTP token decrypts the activation feedback data package using the private key to obtain the activation feedback message, after receiving the activation feedback data package.

In step S308, the OTP token stores the activation feedback message after obtaining the activation feedback message.

In step S309, the OTP token verifies the activation code included in the feedback message.

Specifically, the step of verifying by the OTP token the activation code included in the feedback message may be implemented in the following two ways.
(1) The OTP token obtains the activation code included in the feedback message, generates the activation verification code according to a predetermined activation code generating algorithm, compares the activation code with the activation verification code, and triggers generating the response message if the activation code is consistent with the activation verification code.
(2) if the background system server sends the feedback data package together with the activation verification code to the OTP token, after receiving the feedback data package and the activation verification code and obtaining the feedback message from the feedback data package, the OTP token compares the activation code in the feedback message with the activation verification code and triggers generating the response message if the activation code is consistent with the activation verification code.

In step S310, after the activation code is successfully verified, the OTP token generates an activation response message, obtains a second digital signature by signing the activation response message, obtains an activation response data package according to the activation response message and the second digital signature, and sends the activation response data package to the background system server.

For example, the signature module in the OTP token signs the activation response message to obtain the second digital signature, after the OTP token generates the activation response message.

Specifically, with regard to activation operation instructions, the activation response message generated in this step may include information indicating the background system server to perform an activation process.

Specifically, after the OTP token generates the activation response message, step S310 may be implemented in the following ways.
(1) After signing the activation response message using the private key to obtain the second digital signature, the OTP token generates the activation response data package according to the second digital signature and the activation response message, and sends the activation response data package to the background system server. In this way, the background system server may authenticate the identity of the OTP token using the signature after receiving the activation response message.
(2) After signing the activation response message using the private key to obtain the second digital signature, the OTP token encrypts the activation response message, and then generates the activation response data package according to the second digital signature and the encrypted activation response message, and sends the activation response data package to the background system server. In this way, the background system server may authenticate the identity of the OTP token using the signature after receiving the activation response message, and meanwhile the safety of the data transmission may be ensured by encrypting the data.
(3) After signing the activation response message using the private key to obtain the second digital signature, the OTP token generates the activation response data package by encrypting the second digital signature and the activation response message, and sends the activation response data package to the background system server. In this way, the background system server may authenticate the identity of the OTP token using the signature after receiving the activation response message, and meanwhile the safety of the data transmission may be further ensured by encrypting the data.

In step S311, the background system server receives the activation response data package, obtains the second digital signature and the activation response message from the activation response data package, and verifies the second digital signature.

In step S312, the background system server performs an activation response operation according to the activation response message, after the second digital signature is successfully verified.

Specifically, with regard to the activation response message corresponding to the activation instruction, the background system server performs an activation process according to the activation response message. Meanwhile, the background system server may set the activation process as unavailable, so as to prevent the OTP token from repeated activation.

Specifically, step S308 may be implemented in following ways.
(1) After receiving the activation feedback data package, the OTP token outputs an indication message, and then obtains the activation feedback message by decrypting the activation feedback data package. For example, when the OTP token receives the activation feedback data package, an indication message is displayed on the screen for indicating that a data package is received, i.e. the indication message indicates that the OTP token is performing an operation (such as, a validating operation, an activation operation, a synchronization operation). Also, a progress bar may be shown on the screen, such that the user may learn about the progress of the operation and may take steps to block the operation if the operation is not performed by the user, thus guaranteeing the safety of the user account.
(2) After receiving the activation feedback data package, the OTP token outputs an indication message, and receives a confirmation instruction for confirming the indication instruction. The OTP token decrypts the activation feedback data package to obtain the activation feedback message according to the confirmation instruction. For example, if the OTP token receives the activation feedback data package (indicating that an operation such as a validating operation, an activation operation or a synchronization operation is performed on the OTP token), an indication message is displayed on the screen for indicating that a data package is received, and the operation is interrupted to wait for the confirmation instruction from the user. Only when the user confirms the operation, the OTP token performs the following operation, and decrypts the activation feedback data package to obtain the activation feedback message. In this way, the user may learn about the progress of the operation, and may take steps to block the operation if the operation is not performed by the user, thus guaranteeing the safety of the user account.

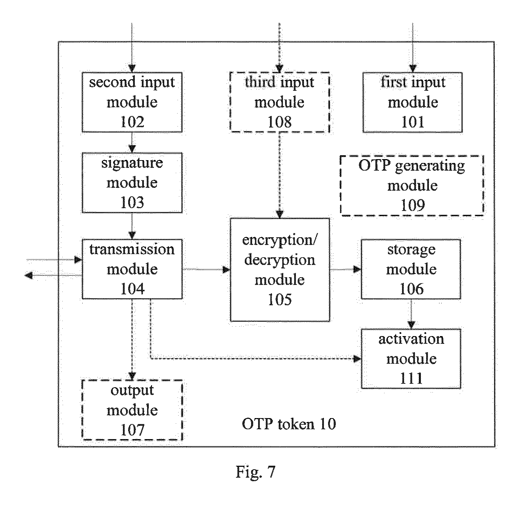

In addition, as shown in Fig. 7, compared with the first embodiment, in the third embodiment, the OTP token further includes an activation module 111, and the activation module 111 is connected with the storage module 106. The activation module verifies the activation code in the following two ways.
(1) The activation module 111 obtains the activation code included in the feedback message after receiving the feedback message, generates the activation verification code according to a predetermined activation code generating algorithm, compares the activation code with the activation verification code, and triggers generating the response message if the activation code is consistent with the activation verification code.
(2) If the transmission module 104 receives the activation verification code sent by the background system server when receiving the feedback data package from outside, the transmission module 104 sends the activation verification code to the activation module 111 when sending the feedback data package to the encryption/decryption module 105, the activation module 111 receives the activation verification code sent by the transmission module 104 when obtaining the feedback message in the storage module 106, the activation module 111 compares the activation code with the activation verification code, and determines that the activation code is successfully verified if the activation code is consistent with the activation verification code.

It can be seen from the technical solutions provided by the present disclosure that, with the activation data transmission method for a OTP token according to the present disclosure, when the

OTP token needs to communicate with the background system server, the communication process between the OTP token and the background system server is improved by means of the digital signature and the encryption/decryption. The present disclosure solves the problem that the communication between the OTP token and the background system server is unsafe in the related art, ensures that the OTP token and the background system server may exchange information with each other reliably, and ensures a safe transmission of the key information such as the seed secret key during activating the OTP token, such that the safety of the user account may be guaranteed. Meanwhile, compared to the related art, the present disclosure is easy to implement and has a simple structure.

### Embodiment 4

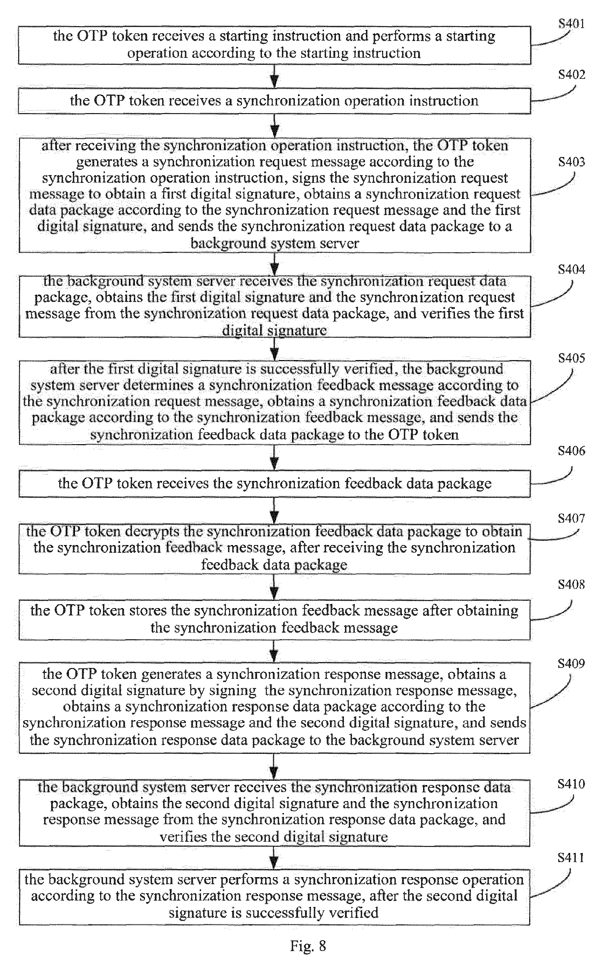

As shown in Fig. 8, in this embodiment, a data transmission method for a OTP token (specifically, a synchronization data transmission method for a OTP token) is provided. During the use of the OTP token, the event factor information in the OTP token may be not synchronous with the event factor information in the background system server due to an error operation or missing an operation. Since the event factor is a factor which is used by the OTP token for generating the OTP, the OTP generated by the OTP token may not match with that in the background system server if the event factors are not synchronous, and thus the OTP token is not available. In this case, a synchronization operation is required to be performed on the OTP token.

In step S401, the OTP token receives a starting instruction and performs a starting operation according to the starting instruction.

Specifically, a user may turn on the power of the OTP token by pressing a button. Or, if the OTP token has already power-on, the OTP token may enter a OTP mode according to an entering OTP mode instruction inputted from outside.

In step S402, the OTP token receives a synchronization operation instruction.

Specifically, the user may input the synchronization operation instruction by pressing a button on the OTP token or via a virtual keyboard, or the user may connect the OTP token with a terminal (a PC, a notebook computer, a mobile phone, etc.) and operate the terminal for sending the synchronization operation instruction to the OTP token. When the OTP token is used for a first time, a synchronization operation is required to be performed on the OTP token, such that the user can use the OTP token.

In step S403, after receiving the synchronization operation instruction, the OTP token generates a synchronization request message according to the synchronization operation instruction, signs the synchronization request message to obtain a first digital signature, obtains a synchronization request data package according to the synchronization request message and the first digital signature, and sends the synchronization request data package to a background system server.

For example, a signature module of the OTP token may sign the synchronization request message to obtain the first digital signature, after the OTP token generates the synchronization request message.

Specifically, the synchronization request message may include a synchronization operation code, account information corresponding to the OTP token and any other related information.

In addition, generally, the existing OTP token only includes a OTP generating module. However, the OTP token according to embodiments of the present disclosure not only includes the OTP generating module, but also includes a signature module. The signature module is configured to sign the data to be sent to the background system server and send the signature data, such that the background system server verifies the signature data after receiving the signature data, thus authenticating the identity of the OTP token, preventing the account from being tampered and stolen, and guaranteeing the safety of the account of the OTP token. The OTP token may include a pair of public key and private key, and a digital certificate for signing. The public key is sent to the background system server by the OTP token. In this way, the OTP token may sign the data using the private key and the background system server may verify the data using the public key. Meanwhile, the background system server may encrypt the data using the public key and send the encrypted data to the OTP token, and the OTP token may decrypt the encrypted data using the private key.

Specifically, after generating the synchronization request message by the OTP token, step S403 may be implemented by the following ways.
(1) After signing the synchronization request message using the private key to obtain the first digital signature, the OTP token generates the synchronization request data package according to the first digital signature and the synchronization request message, and sends the synchronous request data package to the background system server. In this way, the background system server may authenticate the identity of the OTP token using the signature after receiving the synchronization request message.
(2) After signing the synchronization request message using the private key to obtain the first digital signature, the OTP token encrypts the synchronization request message, and then generates the synchronization request data package according to the first digital signature and the encrypted synchronization request message, and sends the synchronization request data package to the background system server. In this way, the background system server may authenticate the identity of the OTP token using the signature after receiving the synchronization request message, and meanwhile the safety of the data transmission may be ensured by encrypting the data.
(3) After signing the synchronization request message using the private key to obtain the first digital signature, the OTP token generates the synchronization request data package by encrypting the synchronization request message and the first digital signature, and sends the synchronization request data package to the background system server. In this way, the background system server may authenticate the identity of the OTP token using the signature after receiving the synchronization request message, and meanwhile the safety of the data transmission may be further ensured by encrypting the data.

The signature algorithm used in the present disclosure is an irreversible algorithm (e.g., Hash algorithm), so as to avoid turning back. The decryption algorithm may be a symmetric algorithm or an asymmetric algorithm.

Other details about a specific method of obtaining the digital signature are well known in the art, which are not elaborated herein.

In step S404, the background system server receives the synchronization request data package, obtains the first digital signature and the synchronization request message from the synchronization request data package and verifies the first digital signature.

Specifically, the background system server needs to verify the data sent by the OTP token, so the background system server includes a verifying module corresponding to the signature module in the OTP token, for example, the background system server holds the public key corresponding to the private key of the OTP token. Specifically, after receiving the request data package, the background system server obtains the first digital signature and the request message from the request data package (if the request data package is encrypted, it should be decrypted firstly), and verifies the first digital signature sent by the OTP token using the public key corresponding to the private key of the OTP token. The specific process of verifying is well known in the related art, which is not elaborated herein.

In step S405, after the first digital signature is successfully verified, the background system server determines a synchronization feedback message according to the synchronization request message, obtains a synchronization feedback data package according to the synchronization feedback message, and sends the synchronization feedback data package to the OTP token.

Specifically, according to the synchronization request message, the background system server selects or generates a corresponding synchronization feedback message. For example, the background system server generates the synchronization code according to the synchronization operation code and related information in the synchronization request message, in which the synchronization code includes the event factor information of the background system server, and then the background system server determines the synchronization feedback message according to the synchronization code. For the safety of the data transmission, the background system server encrypts the synchronization feedback message, for example, the background system server encrypts the synchronization feedback message using the public key, so as to obtain the synchronization feedback data package for transmission.

In step S406, the OTP token receives the synchronization feedback data package.

In step S407, the OTP token decrypts the synchronization feedback data package to obtain the synchronization feedback message, after receiving the synchronization feedback data package.

Specifically, the OTP token decrypts the synchronization feedback data package using the private key to obtain the synchronization feedback message, after receiving the synchronization feedback data package.

In step S408, the OTP token stores the synchronization feedback message after obtaining the synchronization feedback message.

Specifically, the OTP token obtains the synchronization code from the feedback message, and replaces the original event factor with the event factor in the synchronization code, such that the OTP token is synchronous with the background system server and can be used.

In step S409, the OTP token generates a synchronization response message, obtains a second digital signature by signing the synchronization response message, obtains a synchronization response data package according to the synchronization response message and the second digital signature, and sends the synchronization response data package to the background system server.

For example, the signature module in the OTP token signs the synchronization response message to obtain the second digital signature, after the OTP token generates the synchronization response message.

Specifically, with regard to synchronization operation instructions, the synchronization response message generated in this step may include information indicating the background system server to perform a synchronization process.

Specifically, after the OTP token generates the synchronization response message, step S209 may be implemented in the following ways.
(1) After signing the synchronization response message using the private key to obtain the second digital signature, the OTP token generates the synchronization response data package according to the second digital signature and the synchronization response message, and sends the synchronization response data package to the background system server. In this way, the background system server may authenticate the identity of the OTP token using the signature after receiving the synchronization response message.
(2) After signing the synchronization response message using the private key to obtain the second digital signature, the OTP token encrypts the synchronization response message, and then generates the synchronization response data package according to the second digital signature and the encrypted synchronization response message, and sends the synchronization response data package to the background system server. In this way, the background system server may authenticate the identity of the OTP token using the signature after receiving the synchronization response message, and meanwhile the safety of the data transmission may be ensured by encrypting the data.
(3) After signing the synchronization response message using the private key to obtain the second digital signature, the OTP token generates the synchronization response data package by encrypting the second digital signature and the synchronization response message, and sends the synchronization response data package to the background system server. In this way, the background system server may authenticate the identity of the OTP token using the signature after receiving the synchronization response message, and meanwhile the safety of the data transmission may be further ensured by encrypting the data.

In step S410, the background system server receives the synchronization response data package, obtains the second digital signature and the synchronization response message from the synchronization response data package, and verifies the second digital signature.

In step S411, the background system server performs a synchronization response operation according to the synchronization response message, after the second digital signature is successfully verified.

Specifically, with regard to the synchronization response message corresponding to the synchronization instruction, the background system server performs a synchronization process according to the synchronization response message.

Specifically, step S408 may be implemented in following ways.
(1) After receiving the synchronization feedback data package, the OTP token outputs an indication message, and then obtains the synchronization feedback message by decrypting the synchronization feedback data package. For example, when the OTP token receives the synchronization feedback data package, an indication message is displayed on the screen for indicating that a data package is received, i.e. the indication message indicates that the OTP token is performing an operation (such as, a validating operation, an activation operation, a synchronization operation). Also, a progress bar may be shown on the screen, such that the user may learn about the progress of the operation and may take steps to block the operation if the operation is not performed by the user, thus guaranteeing the safety of the user account.
(2) After receiving the synchronization feedback data package, the OTP token outputs an indication message, and receives a confirmation instruction for confirming the indication message. The OTP token decrypts the synchronization feedback data package to obtain the synchronization feedback message according to the confirmation instruction. For example, if the OTP token receives the synchronization feedback data package (indicating that an operation such as a validating operation, an activation operation or a synchronization operation is performed on the OTP token), an indication message is displayed on the screen for indicating that a data package is received, and the operation is interrupted to wait for the confirmation instruction from the user. Only when the user confirms the operation, the OTP token performs the following operation, and decrypts the synchronization feedback data package to obtain the synchronization feedback message. In this way, the user may learn about the progress of the operation and may take steps to block the operation if the operation is not performed by the user, thus guaranteeing the safety of the user account.

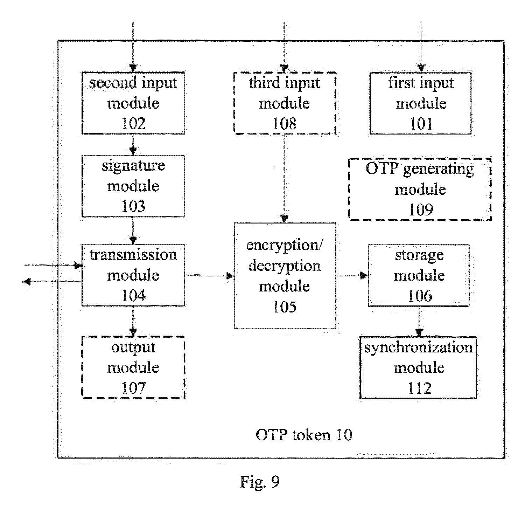

In addition, as shown in Fig. 9, compared with the first embodiment, in the fourth embodiment, the OTP token further includes a synchronization module 112, and the synchronization module 112 is connected with the storage module 106 and configured to perform a synchronization operation according to the feedback message in the storage module 106.

It can be seen from the technical solutions provided by the present disclosure that, with the synchronization data transmission method for a OTP token according to the present disclosure, when the OTP token needs to communicate with the background system server, the communication process between the OTP token and the background system server is improved by means of the digital signature and the encryption/decryption. The present disclosure solves the problem that the communication between the OTP token and the background system server is unsafe in the related art, ensures that the OTP token and the background system server may exchange information with each other reliably, and ensures a safe transmission of the key information such as the seed secret key during synchronizing the OTP token, such that the safety of the user account may be guaranteed. Meanwhile, compared to the related art, it is easy to implement the present disclosure, and the structure is uncomplicated.

The logic and step described in the flow chart or in other manners, for example, a scheduling list of an executable instruction to implement the specified logic function(s), it can be embodied in any computer-readable medium for use by or in connection with an instruction execution system such as, for example, a processor in a computer system or other system. In this sense, the logic may comprise, for example, statements including instructions and declarations that can be fetched from the computer-readable medium and executed by the instruction execution system. In the context of the present disclosure, a "computer-readable medium" can be any medium that can contain, store, or maintain the printer registrar for use by or in connection with the instruction execution system. The computer readable medium can comprise any one of many physical media such as, for example, electronic, magnetic, optical, electromagnetic, infrared, or semiconductor media. More specific examples of a suitable computer-readable medium would include, but are not limited to, magnetic tapes, magnetic floppy diskettes, magnetic hard drives, or compact discs. Also, the computer-readable medium may be a random access memory (RAM) including, for example, static random access memory (SRAM) and dynamic random access memory (DRAM), or magnetic random access memory (MRAM). In addition, the computer-readable medium may be a read-only memory (ROM), a programmable read-only memory (PROM), an erasable programmable read-only memory (EPROM), an electrically erasable programmable read-only memory (EEPROM), or other type of memory device.

Although the device, system, and method of the present disclosure is embodied in software or code executed by general purpose hardware as discussed above, as an alternative the device, system, and method may also be embodied in dedicated hardware or a combination of software/general purpose hardware and dedicated hardware. If embodied in dedicated hardware, the device or system can be implemented as a circuit or state machine that employs any one of or a combination of a number of technologies. These technologies may include, but are not limited to, discrete logic circuits having logic gates for implementing various logic functions upon an application of one or more data signals, application specific integrated circuits having appropriate logic gates, programmable gate arrays (PGA), field programmable gate arrays (FPGA), or other components, etc. Such technologies are generally well known by those skilled in the art and, consequently, are not described in detail herein.

It can be understood that all or part of the steps in the method of the above embodiments can be implemented by instructing related hardware via programs, the program may be stored in a computer readable storage medium, and the program includes one step or combinations of the steps of the method when the program is executed.

In addition, each functional unit in the present disclosure may be integrated in one progressing module, or each functional unit exists as an independent unit, or two or more functional units may be integrated in one module. The integrated module can be embodied in hardware, or software. If the integrated module is embodied in software and sold or used as an independent product, it can be stored in the computer readable storage medium.

The computer readable storage medium may be read-only memories, magnetic disks, or optical disks.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, alternatives, and modifications can be made in the embodiments without departing from spirit, principles and scope of the present disclosure.

## Claims

1. A data transmission method for a One-Time Password token, comprising:
receiving by the One-Time Password token a starting instruction and performing a starting operation according to the starting instruction;
receiving by the One-Time Password token an operation instruction;
generating by the One-Time Password token a request message according to the operation instruction after receiving the operation instruction, signing the request message to obtain a first digital signature, obtaining a request data package according to the request message and the first digital signature, and sending the request data package to a background system server;
receiving by the background system server the request data package, obtaining the first digital signature and the request message from the request data package, and verifying the first digital signature;
determining by the background system server a corresponding feedback message according to the request message after the first digital signature is successfully verified, obtaining a feedback data package by encrypting the feedback message, and sending the feedback data package to the One-Time Password token;
receiving by the One-Time Password token the feedback data package;
decrypting by the One-Time Password token the feedback data package to obtain the feedback message after receiving the feedback data package;
storing by the One-Time Password token the feedback message after obtaining the feedback message;
generating by the One-Time Password token a response message, signing the response message to obtain a second digital signature, obtaining a response data package according to the response message and the second digital signature, and sending the response data package to the background system server;
receiving by the background system server the response data package, obtaining the second digital signature and the response message from the response data package, and verifying the second digital signature;
performing by the background system server a response operation according to the response message after the second digital signature is successfully verified.

2. The data transmission method according to claim 1, wherein the operation instruction is a validating operation instruction, the request message is a validating request message comprising a validating operation code and account information, and the feedback message comprises at least one seed secret key.

3. The data transmission method according to claim 2, wherein the feedback message further comprises event factor information.

4. The data transmission method according to claim 1, wherein the operation instruction is an activation operation instruction, the request message is an activation request message comprising an activation operation code and account information, and the feedback message comprises an activation code;
the data transmission method further comprises:
verifying by the One-Time Password token the activation code included in the feedback message after storing the feedback message by the One-Time Password token;
triggering generating the response message by the One-Time Password token, after the activation code is successfully verified by the One-Time Password token.

5. The data transmission method according to claim 4, wherein verifying by the One-Time Password token the activation code included in the feedback message comprises:
obtaining by the One-Time Password token the activation code included in the feedback message, generating by the One-Time Password token an activation verification code according to a predetermined activation code generating algorithm, comparing by the One-Time Password token the activation code with the activation verification code, and triggering generating the response message by the One-Time Password token if the activation code is consistent with the activation verification code;
or
if the background system server sends the feedback data package together with an activation verification code to the One-Time Password token, after receiving by the One-Time Password token the feedback data package and the activation verification code and obtaining by the One-Time Password token the feedback message from the feedback data package, comparing by the One-Time Password token the activation code included in the feedback message with the activation verification code, and triggering generating the response message by the One-Time Password token if the activation code is consistent with the activation verification code.

6. The data transmission method according to claim 1, wherein the operation instruction is a synchronization operation instruction, the request message is synchronization request message comprising a synchronization operation code and account information, and the feedback message comprises a synchronization code.

7. The data transmission method according to any of claims 1-6, wherein decrypting by the One-Time Password token the feedback data package to obtain the feedback message after receiving the feedback data package comprises:
outputting by the One-Time Password token an indication message after receiving the feedback data package;
receiving by the One-Time Password token a confirmation instruction for confirming the indication message;
decrypting by the One-Time Password token the feedback data package according to the confirmation instruction, so as to obtain the feedback message.

8. A One-Time Password token, comprising a first input module, a second input module, a signature module, a transmission module, an encryption/decryption module and a storage module, wherein
the first input module is configured to receive a starting instruction and to perform a starting operation according to the starting instruction;
the second input module is configured to receive an operation instruction and to send the operation instruction to the signature module;
the signature module is configured to generate a request message according to the operation instruction, to sign the request message to obtain a first digital signature, to obtain a request data package according to the request message and the first digital signature, and to send the request data package to the transmission module;
the transmission module is configured to send the request data package to an external device after receiving the request data package sent by the signature module, to receive a feedback data package sent from the external device, and to send the feedback data package to the encryption/decryption module;
the encryption/decryption module is configured to decrypt the feedback data package to obtain a feedback message after receiving the feedback data package sent by the transmission module, and to send the feedback message to the storage module;
the storage module is configured to store the feedback message after receiving the feedback message sent by the encryption/decryption module;
the signature module is further configured to generate a response message after storing the feedback message by the storage module, to sign the response message to obtain a second digital signature, to obtain a response data package according to the response message and the second digital signature, and to send the response data package to the transmission module;
the transmission module is further configured to send the response data package to the external device after receiving the response data package sent by the signature module.

9. The One-Time Password token according to claim 8, further comprising:
a one-time password generating module, configured to generate a one-time password.

10. The One-Time Password token according to claim 8 or 9, further comprising a validating module; wherein
the operation instruction is a validating operation instruction;
the request message is a validating request message comprising a validating operation code and account information;
the feedback message comprises at least one seed secret key;
the validating module is connected with the storage module and configured to perform a validating operation according to the feedback message stored in the storage module.

11. The One-Time Password token according to claim 10, wherein the feedback message further comprises event factor information.

12. The One-Time Password token according to claim 8 or 9, further comprising an activation module, wherein
the operation instruction is an activation operation instruction;
the request message is an activation request message comprising an activation operation code and account information;
the feedback message comprises an activation code;
the activation module is connected with the storage module;
the activation module is configured to obtain the activation code included in the feedback message after receiving the feedback message, to generate an activation verification code according to a predetermined activation code generating algorithm, to compare the activation code with the activation verification code, and to determine that the activation code is successfully verified if the activation code is consistent with the activation verification code;
or
the transmission module is further configured to receive an activation verification code from the external device when receiving the feedback data package from the external device, and to send the activation verification code to the activation module when sending the feedback data package to the encryption/decryption module, and the activation module is configured to receive the activation verification code sent by the transmission module when receiving the feedback message sent by the encryption/decryption module, to compare the activation code included in the feedback message with the activation verification code, and to determine that the activation code is successfully verified if the activation code is consistent with the activation verification code.

13. The One-Time Password token according to claim 8 or 9, further comprising a synchronization module, wherein
the operation instruction is a synchronization operation instruction;
the request message is a synchronization request message comprising a synchronization operation code and account information;
the feedback message comprises a synchronization code;
the synchronization module is connected with the storage module, and configured to perform a synchronization operation according to the feedback message stored in the storage module.

14. The One-Time Password token according to any of claims 8-13, further comprising an output module and a third input module, wherein
the output module is configured to output an indication message after receiving the feedback data package by the transmission module;
the third input module is configured to receive a confirmation instruction for confirming the indication message, and to trigger the transmission module according to the confirmation instruction for sending the feedback data package to the encryption/decryption module.

15. A data transmission system, comprising a background system server and a One-Time Password token according to any of claims 8-14, wherein the background system server is configured to:
receive the request data package sent by the One-Time Password token, obtain the first digital signature and the request message from the request data package and verify the first digital signature;
generate the feedback message according to the request message after the first digital signature is successfully verified, obtain the feedback data package by encrypting the feedback message, and send the feedback data package to the One-Time Password token;
receive the response data package sent by the One-Time Password token, obtain the second digital signature and the response message from the response data package and verify the second digital signature;
perform a response operation according to the response message after the second digital signature is successfully verified.
